(19) **Europäisches Patentamt**
**European Patent Office**
**Office européen des brevets**

(11) **EP 2 130 853 B1**

(12) **EUROPEAN PATENT SPECIFICATION**

(45) Date of publication and mention
of the grant of the patent:
**11.07.2018 Bulletin 2018/28**

(51) Int Cl.:
*C08G 69/28* $^{(2006.01)}$  *C08G 69/26* $^{(2006.01)}$

(21) Application number: **09161095.6**

(22) Date of filing: **26.05.2009**

(54) **Process for producing polyamide**

Verfahren zur Herstellung von Polyamid

Procédé de production de polyamide

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **29.05.2008 JP 2008140770**

(43) Date of publication of application:
**09.12.2009 Bulletin 2009/50**

(73) Proprietor: **Mitsubishi Gas Chemical Company, Inc.**
**Tokyo (JP)**

(72) Inventors:
• **Kikuchi, Minoru**
  **Niigata-shi, Niigata (JP)**

• **Shinohara, Katsumi**
  **Niigata-shi, Niigata (JP)**
• **Kurose, Hideyuki**
  **Niigata-shi, Niigata (JP)**
• **Kanda, Tomomichi**
  **Niigata-shi, Niigata (JP)**

(74) Representative: **Gille Hrabal**
**Brucknerstrasse 20**
**40593 Düsseldorf (DE)**

(56) References cited:
**EP-A1- 1 698 667**      **EP-A1- 2 327 738**
**DE-A1-102005 051 400**      **US-A- 3 649 602**
**US-A- 5 416 189**      **US-A1- 2003 168 631**

**Description**

Field of the Invention

The present invention relates to a process for producing a polyamide through direct polycondensation of a dicarboxylic acid component and a diamine component substantially in the absence of a solvent. More precisely, the present invention relates to an efficient process for producing a homogeneous polyamide through direct polycondensation of a diamine component containing paraxylylenediamine and a dicarboxylic acid component, using a batch reactor equipped with a partial condenser.

Background of the Invention

A general process for production of polyamide comprises starting from a nylon salt or its aqueous solution, heating the aqueous nylon salt solution under pressure in one reactor as a batch process, promoting the polymerization in a homogeneous phase with suppressing the evaporation of a diamine component, then fixing the diamine component, gradually releasing the water vapor from the system, and finally completing the polymerization under normal pressure or reduced pressure. In this process, an aqueous solution of about 50 wt.% of a nylon salt is generally used as the starting material; however, the condensed water with a large quantity of water as the solvent must be removed, and there may occur some problems in that polyamide may adhere to the wall surface of the reactor and may cause thermal degradation owing to foaming, polymer solidification due to water evaporation latent heat, and great liquid level fluctuation during reaction. For avoiding such various disadvantages, some measures must be taken. In addition, for removing a large quantity of water, much thermal energy is needed, and the polyamide yield in one batch reaction is small. To that effect, the method has many technical and economical problems. On the other hand, in case where a nylon salt is used as the starting material (JP 33-15700B, 43-22874B), these problems may be solved considerably, but the process requires a step of separation and purification of the nylon salt, and it could not be said that the method is an efficient method.

JP 48-12390A discloses a polymerization process not starting from a nylon salt and an aqueous solution of a nylon salt, in which a diamine component containing a small amount of water is dropwise added to and reacted with a dicarboxylic acid component, under normal pressure at a temperature not higher than 220°C. JP 1-14925B and JP 58-111829A disclose a process comprising dropwise adding a diamine component to a dicarboxylic acid component under normal pressure for direction reaction of the two. These processes are technically and economically advantageous, but are problematic in that a diamine component is directly added to a dicarboxylic acid component under normal pressure.

A dicarboxylic acid component in a molten state is sublimable, and a sublimed dicarboxylic acid component may adhere to the ceiling of a polymerization reactor. In addition, a sublimed dicarboxylic acid component may also adhere to the inner walls of various pipelines connected to the upper part of a polymerization reactor, for example, the additive supply port, the diamine component addition port, the inner wall of the duct to lead the water vapor mainly comprising the condensed water formed through polymerization from the reactor to a partial condenser, and the inside of the partial condenser. The sublimed dicarboxylic acid component thus adhering to these is almost completely dissolved and washed away by the vapor of the condensed water to form through the reaction in the polymerization process. The sublimed dicarboxylic acid component forms not only when the molten dicarboxylic acid component exists alone in the polymerization reactor but also in the diamine component addition step where the fixation of the dicarboxylic acid component is insufficient.

The sublimed dicarboxylic acid component adhering to the polymerization reactor reacts with the diamine component accompanied by the vapor of the condensed water to form through the polycondensation, thereby giving a nylon salt or an oligomer. As compared with the salt comprising metaxylylenediamine and a dicarboxylic acid, the salt comprising paraxylylenediamine and a dicarboxylic acid has a low solubility in water, and therefore with the increase in the paraxylylenediamine content in diamine, those not dissolving in the condensed water increases. After repetition of the batch reaction, the amidation further goes on to give an oligomer, of which the solubility in water further decreases. The adhering substance is exposed to long-term thermal history, and therefore, when it peels off and mixes in the product, polymer, then the contaminated polymer has some risks of quality failures in that when it is shaped into final products of films, bottles, monofilaments and others, they may have gel spots, etc. The amount of the nylon salt or oligomer adhering to and depositing in the pipelines for leading the vapor comprising mainly the condensed water to form through polymerization to a partial condenser and the partial condenser is the greatest of all the parts of a polymerization reactor, and therefore, when the substance continues being deposited, then it may clog up these pipelines and partial condenser, therefore making it difficult to further carry out the continuous batch production. In the polyamide to be produced from a diamine component and a dicarboxylic acid component, it is extremely important to control the molar balance between the two for attaining the desired degree of polymerization; however, since the deposited amount in the reactor fluctuates in every batch, high-level molar balance control may be difficult, and there remain many disadvantages in producing homogeneous and good products according to the method of direct addition of a diamine component to a dicarboxylic acid component under normal pressure.

JP 6-207004A discloses a method of adding a whole amount of a diamine component to a dicarboxylic acid component within an extremely short period of time under pressure for direction reaction of the two. In this method, a whole amount of a diamine component is added within an extremely short period of time, therefore bringing about various disadvantages. The method requires various measures to be taken for it for avoiding the problems of foaming with the condensed water to form in a large quantity within a short period of time, liquid level fluctuation, polymer solidification owing to evaporation latent heat of water, distillation off of monomer, etc. Especially for pressure, the method requires high pressure, and the step of lowering the pressure for promoting the polymerization takes a long period of time since the pressure is lowered while suppressing foaming; however, during the step, the polyamide is exposed to high temperature, and the polyamide molecules may be degraded through oxidation and may be yellowed. In addition, the large amount of condensed water forming within a short period of time must be removed and the entire reaction system must be kept at a temperature at which it may keep a uniform flow condition, and therefore, the method requires much thermal energy within a short period of time. Accordingly, the method may require any superfluous heating unit and others, and is therefore much problematic in point of the technical and economical aspects.

JP 7-324130A discloses a method of adding a diamine component containing metaxylylenediamine and paraxylylenediamine to adipic acid and reacting them, wherein the paraxylylenediamine concentration in the diamine component is lowered in the latter stage of the reaction. In the method, diamines having a different composition must be prepared, and therefore the number of the necessary devices increases, and in addition, the method requires a complicated operation of switching the diamines to be added to the reaction system, and it could not be said that the method is an efficient method.

Accordingly, an efficient process is desired capable of producing a homogeneous polyamide through direct polycondensation of a paraxylylenediamine-containing diamine component and a dicarboxylic acid component.

Summary of the Invention

An object of the present invention is to provide an economically advantageous method of batch production of a polyamide of good quality through direct polycondensation of a diamine component containing paraxylylenediamine and a dicarboxylic acid component, using a batch reactor equipped with a partial condenser.

The present inventors have assiduously studied and, as a result, have found that, in a process of batch production of a polyamide through direct polycondensation comprising adding a diamine component, which contains at least 70 mol% of a xylylenediamine comprising the two components of metaxylylenediamine and paraxylylenediamine and containing 20 to 65 mol% of paraxylylenediamine, to a dicarboxylic acid component, using a batch reactor equipped with a partial condenser, when the diamine component is added under pressure while the reaction system is kept in a uniform flow state as a whole, and after the completion of addition of the diamine component, when the pressure is lowered at a specific pressure-lowering speed, then a polyamide of good quality can be produced economically, and have completed the present invention.

Specifically, the present invention relates to a process for producing a polyamide through direct polycondensation of a diamine component, which contains at least 70 mol% of a xylylenediamine comprising the two components of metaxylylenediamine and paraxylylenediamine and containing 20 to 65 mol% of paraxylylenediamine, and a dicarboxylic acid component, substantially in the absence of a solvent and using a batch reactor equipped with a partial condenser; the method comprising the following steps:

(1) a step of feeding the dicarboxylic acid component into the reactor, and then pressurizing the reactor to increase the inner pressure to a pressure of at least 0.1 MPaG,
(2) a step of continuously or intermittently adding the diamine component to the dicarboxylic acid component while the pressure inside the reactor is kept at the predetermined pressure and while the reaction system is kept in a uniform flow state,
(3) after the addition of the diamine component, a step of lowering the pressure inside the reactor to atmospheric pressure or less at a pressure-lowering speed of from 0.1 to 0.6 MPa/hr, whereby the expression "substantially in the absence of a solvent" is meant to indicate that no solvent exists in the reaction system, or a small amount of the solvent is present to a degree not having any influence on the effect of the present invention.

Detailed Description of the Invention

The dicarboxylic acid component for use in the production process of the present invention includes, for example, an aliphatic dicarboxylic acid such as succinic acid, glutaric acid, adipic acid, pimelic acid, suberic acid, azelaic acid, sebacic acid, undecane diacid, dodecane diacid, etc.; an aromatic dicarboxylic acid such as terephthalic acid, isophthalic acid, 2,6-naphthalenedicarboxylic acid, etc. Of those, preferred is adipic acid from the viewpoint of the practical physical properties of the polyamide to be obtained. One or more of these may be used either singly or as combined. Also from the same viewpoint, the dicarboxylic acid component is preferably a dicarboxylic acid containing at least 70 mol%, more preferably at least 90 mol% of adipic acid.

The diamine component for use in the production process of the present invention is a diamine containing at least 70 mol%, preferably at least 90 mol% of a xylylenediamine from the viewpoint of the practical physical properties of the polyamide to be obtained. The xylylenediamine contains 20 to 65 mol%, preferably at least 30 mol% of paraxylylenediamine from the viewpoint of the crystallinity of the polyamide to be obtained. The xylylenediamine comprises two components of metaxylylenediamine and paraxylylenediamine, in which the content of paraxylylenediamine in the xylylenediamine is from 20 to 65 mol%, more preferably from 30 to 50 mol%. Further, as the other diamine component, any of an aliphatic diamine such as tetramethylenediamine, pentamethylenediamine, hexamethylenediamine, 1,7-diaminoheptane, 1,8-diaminooctane, 1,9-diaminononane, 1,10-diaminodecane, etc.; an aromatic diamine such as metaphenylenediamine, paraphenylenediamine, etc.; an alicyclic diamine such as 1,3-bis(aminomethyl)cyclohexane, 1,4-bis(aminomethyl)cyclohexane, etc., may be in the diamine component in an amount of at most 30 mol% of all the diamines therein.

Not specifically defined, the other polyamide-forming component than the diamine component and the dicarboxylic acid component includes a lactam such as caprolactam, valerolactam, laurolactam, undecalactam, etc.; an aminocarboxylic acid such as 11-aminoundecanoic acid, 12-aminododecanoic acid, et.; and one or more of these may be in the polyamide.

For evading a problem of coloration in melt polymerization, a phosphorus compound may be added to the polyamide. The phosphorus compound includes a hypophosphorous acid compound such as hypophosphorous acid, hypophosphite; a phosphorous acid compound such as phosphorous acid, phosphite, phosphite ester; a phosphoric acid compound such as phosphoric acid, phosphate, phosphate ester, etc. The hypophosphite includes potassium hypophosphite, sodium hypophosphite, calcium hypophosphite, magnesium hypophosphite, manganese hypophosphite, nickel hypophosphite, cobalt hypophosphite, etc. The phosphite includes potassium phosphite, sodium phosphite, calcium phosphite, magnesium phosphite, manganese phosphite, nickel phosphite, cobalt phosphite, etc. The phosphite ester includes methyl phosphite, ethyl phosphite, isopropyl phosphite, butyl phosphite, hexyl phosphite, isodecyl phosphite, decyl phosphite, stearyl phosphite, phenyl phosphite, etc. The phosphate includes potassium phosphate, sodium phosphate, calcium phosphate, magnesium phosphate, manganese phosphate, nickel phosphate, cobalt phosphate, etc. The phosphate ester includes methyl phosphate, ethyl phosphate, isopropyl phosphate, butyl phosphate, hexyl phosphate, isodecyl phosphate, decyl phosphate, stearyl phosphate, phenyl phosphate, etc. One or more of these phosphorus compounds may be used either singly or as combined. For adding the phosphorus compound, there may be mentioned a method of adding it to the starting material for polyamide, a diamine component or a dicarboxylic acid; or a method of adding it during reaction; however, the present invention should not be limited to these.

The polyamide production is attained substantially in the absence of a solvent because of the economical superiority thereof. "Substantially in the absence of a solvent" is meant to indicate not only that no solvent exists in the reaction system, but also that the presence of a small amount of a solvent to a degree not having any influence on the effect of the present invention is not excluded.

The batch reactor in the present invention is equipped with a partial condenser and, if desired, a stirrer, and this is so planned as to be resistant to pressure. For retarding the distillation off of the diamine component and the dicarboxylic acid component, the partial condenser is preferably equipped such that the temperature of the heat conductive surface thereof is controllable.

In the present invention, in order to obtain a polyamide having a desired molar balance (including a case with an excessive diamine component, a case with an excessive dicarboxylic acid component and a case with equimolar components), the molar balance of the starting materials to be fed into a reactor may be selected in any desired manner. For controlling the molar balance of the starting materials to be fed into a reactor, for example, the dicarboxylic acid component is fed into the reactor while the weight of the dicarboxylic acid component in a melt state is measured along with weight of the melting tank where the acid component is melted, using a mass meter, and then the diamine component is fed into the reaction system while the weight of the diamine component in the storage tank is measured using a mass meter. In case where the amount of the diamine component and that of the dicarboxylic acid component are measured in the present invention, favorably used is a mass meter such as a load cell, a balance, etc.

The polyamide production process of the present invention comprises the following three steps (1) to (3):

<Step (1)>

In the step (1), a dicarboxylic acid component is fed into a reactor, and then the pressure inside the reactor is increased up to at least 0.1 MPaG. As the pressure is increased up to at least 0.1 MPaG, the dicarboxylic acid component is prevented from evaporating away, and therefore, the amount of the dicarboxylic acid to adhere and deposit inside the polymerization reactor can be reduced and the formation of nylon salt or oligomer may be prevented during synthesis.

For the purpose of preventing the polyamide from being oxidized and discolored, preferably, the reactor is previously fully purged with an inert gas such as nitrogen prior to feeding of the dicarboxylic acid component into the reactor. Further, in case where the dicarboxylic acid is melted, preferably, the melting operation is effected in an inert gas atmosphere. The dicarboxylic acid component may be heated in the reactor up to a temperature higher than its melting point to be in a melt, or it may be heated and melted in any other exclusive melting, different from the reactor, and the resulting melt may be fed into the reactor. Any of these methods is employable herein. From the viewpoint of increasing the utilization efficiency of the reactor, use of the exclusive melting tank is preferred.

The step of increasing the pressure inside the reactor up to at least 0.1 MPaG may be finished before the start of the addition of the diamine component to the dicarboxylic acid component in the reactor. For reducing the evaporation of the dicarboxylic acid component, preferably, the pressure inside the reactor is rapidly increased up to at least 0.1 MPa immediately after the finish of the feeding of the dicarboxylic acid component into the reactor. The pressure inside the reactor may be increased with an inert gas such as nitrogen or with water vapor. Though varying depending on type of the diamine component and the dicarboxylic acid component used, the pressure inside the reactor is preferably selected from a range of from 0.1 to 0.4 MPaG from the above-mentioned viewpoint.

<Step (2)>

In the step (2), a diamine component is continuously or intermittently added to the dicarboxylic acid component, while the pressure inside the reactor is kept at the predetermined pressure and while the reaction system is kept in a uniform flow state. After the pressure increase in the step (1), the above-mentioned predetermined pressure is kept as such; and for the purpose of preventing the diamine component from too much distillating off to outside the system, preferably, the system is driven under the predetermined pressure which the inner pressure of the system has reached in the step (1). In the present invention, after the pressure inside the reactor has been increased up to at least 0.1 MPa in the step (1) and before the pressure is lowered in the subsequent step (3), the system is controlled within a range not having any negative influence on the system driving and on the product quality, and the pressure is controlled to be substantially constant. "Substantially constant" is meant to include a technical concept that the pressure may not be completely constant but may fluctuate in some degree so far as the process under the pressure can exhibit the effect of the present invention.

In case where temperature of vapor phase part is constant, as a result of increasing the pressure inside the reactor, the mole fraction of the diamine component and the dicarboxylic acid component in the vapor phase part lowers and, with that, the amount of the diamine component and the dicarboxylic acid component to evaporate away may decrease, and therefore, the amount of the nylon salt or oligomer deposit in the polymerization reactor may be thereby reduced. Further, since the saturated water vapor pressure increases, the dew-point temperature of water increases, and therefore the solubility of the nylon salt in water increases. In the present invention, the nylon salt and oligomer adhesion to the reactor during the reaction is retarded, and the reactor is effectively washed with the condensed water to form through the polycondensation of the diamine component and the dicarboxylic acid component, whereby the nylon salt and oligomer adhesion may be more effectively reduced.

When the diamine component is added to the dicarboxylic acid component, the system is preferably heated up to a temperature not lower than 150°C at which the amidation of the dicarboxylic acid promote; and also preferably, the oligomer and/or the low-molecular-weight polyamide to form as an intermediate is in a melt state and the reaction system keeps a uniform flow state as a whole. Preferably, the above addition is attained generally at a temperature selected from a range of from 180 to 340°C.

The heating speed depends on heat of the amidation reaction, latent heat of the evaporation of the condensed water, the heat supply, etc., and therefore, the diamine component addition speed is suitably controlled, and at the end of the addition, the temperature of the reaction mixture is controlled preferably to be from the melting point to lower than the (melting point + 35°C) of the product, polyamide, more preferably from the melting point to lower than the (melting point + 15°C), even more preferably from the (melting point + 5°C) to lower than the (melting point + 10°C). The melting point as referred to in the present invention means the endothermic peak temperature resulting from the heat of crystal melting to be determined through differential scanning calorimeter (DSC) or the like, and the melting point of the reaction system can be confirmed suitably in determination through DSC, etc.

A concrete operation of adding a diamine component in the present invention is described as follows. The dicarboxylic acid component in a melt state in the reactor is stirred, and a diamine component is continuously or intermittently added thereto, and preferably, the reaction mixture is gradually heated up to the above-mentioned temperature so that the reaction system can keep a uniform flow state.

In case where the diamine component is added continuously, the diamine component addition speed in the present invention is suitably so selected that foaming with the condensed water to form through the polycondensation can be prevented at the determined addition speed. Preferably, the time to be taken for addition of the diamine component is from 30 minutes to 4 hours, more preferably from 60 minutes to 2 hours. In case where the diamine component is added within an extremely short period of time, then it may be advantageously in the economical aspect, but owing to the foaming with the condensed water to form much within a short period of time, the liquid level may increase and the polymer may adhere to the side wall of the reactor and to the stirring blade, etc. The deposit could not be melted in the subsequent batches, and after the repetition of the batch process, the amount of the adhering deposit increases and the deposit is exposed to the subsequent thermal history. When the adhering deposit drops off and mixes in the polymer, then it may worsen the quality of the product and may cause other problems in that the stirring blade may be broken, etc. In case where the time to be taken for addition of the diamine component is extremely long, then it may cause still other disadvantages of thermal history increase or productivity decline. Accordingly, in general, the time for the addition is preferably within 4 hours. In case where the diamine component is added intermittently, the total time for the addition is preferably so controlled as to fall within the time for the continuous addition as above.

The condensed water to form with the promotion of the reaction is distilled off to outside the reaction system through the partial condenser and further through the condenser. In this, for preventing the amidation inside the partial condenser, preferably, the temperature of the vapor outlet port of the partial condenser is controlled to be not higher than 155°C. Also preferably, the temperature of the vapor outlet port of the partial condenser is controlled to be not higher than 155°C even during the subsequent step (3) to be described below, and the pressure retention time between the step (2) and the step (3), more preferably not higher than 155°C and within a range of from the dew-point temperature of water to the (dew point temperature + 5°C). The diamine component to evaporate away from the reactor as a vapor along with the condensed water, and the dicarboxylic acid component to evaporate away through evaporation are separated from the water vapor in the partial condenser, and are again returned back to the reactor. In case where the continuous production is attained at a temperature higher than 155°C as the vapor outlet port temperature of the partial condenser, the nylon salt or the oligomer not dissolving in the reflux liquid (condensed water and diamine component) inside the partial condenser may be further subjected to amidation reaction to give a polymer, and therefore the polymer is further insoluble in the reflux. With the repetition of the batch process, the polymer amount inside the partial condenser increases to cause the clogging of the inside of the partial condenser and the continuous batch production may be thereby difficult. For the purpose of efficiently distillating off the condensed water to form with the promotion of the reaction, out of the reaction system, preferably, the vapor outlet port temperature of the partial condenser is controlled to be not higher than 155°C and to fall within a range of from the dew-point temperature of water to the (dew point temperature + 5°C), during the step (2) and the step (3) to be mentioned below. In case where the vapor outlet port temperature of the partial condenser is much higher than the dew point temperature of water, then the amount of the reflux liquid in the partial condenser decreases and therefore, the nylon salt or the oligomer adhering to the partial condenser may not be effectively washed off. In addition, much evaporation of the diamine component out of the reaction system may be inevitable, and the molar balance control may be difficult. For securing the suitable vapor outlet port temperature of the partial condenser, preferably, the driving condition of the partial condenser is selected suitably. For example, in case where the inner pressure of the reactor is 0.3 MPaG, the vapor outlet port temperature of the partial condenser is controlled to be from 143°C to 148°C.

<Step (3)>

In the step (3), after the diamine component addition, the pressure inside the reactor is lowered to atmospheric pressure or less at a pressure-lowering speed of from 0.1 to 0.6 MPa/hr. In this stage, it is desirable that the pressure is lowered to a reduced pressure, preferably to at most 80 kPa, and the water vapor existing in the vapor phase is evaporated away from the reaction system and the degree of polymerization is further increased based on the amidation equilibrium. During the pressure reduction, the reaction system keeps a uniform flow state as a whole. During the step of lowering the pressure inside the reactor, the pressure-lowering speed is selected at which the formed polyamide is prevented from foaming. Depending on the size of the reactor and the pressure therein, the pressure in the reactor is lowered at a speed of from 0.1 to 0.6 MPa/hr. When the pressure-lowering speed is higher than 0.6 MPa/hr, the liquid level may increase owing to foaming, and the polymer may adhere to the side wall of the reactor and to the stirring blade, etc. The deposit could not be melted in the subsequent batches but may remain inside the reactor, and after the repetition of the batch process, the amount of the adhering deposit increases and the deposit is exposed to the subsequent thermal history. When the adhering deposit drops off and mixes in the polymer, then it may worsen the quality of the product and may cause other problems in that the stirring blade may be broken, etc. When the pressure is lowered at a speed lower than 0.1 MPa/hr, then it is also unfavorable since the polyamide may yellow owing to the increased thermal history thereof and the producibility may lower. From the above-mentioned viewpoints, the pressure-lowering speed is preferably within a range of from 0.3 to 0.6 MPa/hr, more preferably within a range of from 0.4 to 0.5 MPa/hr.

In the present invention, after the completion of addition of the diamine component and before the start of pressure reduction, preferably, the reaction system is kept under the pressure at the time of the end of the diamine component addition, for from 5 minutes to 3 hours, more preferably for from 10 minutes to 1 hour while the system is entirely kept in a uniform flow condition. In the initial stage of the diamine component addition, the carboxyl group exists in the system excessively compared with the diamine component, and the reaction speed, or that is, the fixation speed of the diamine component is extremely high. However, at the end of the addition, the carboxyl group is considerably consumed and, as compared with that in the initial stage of the addition, the fixation speed of the diamine component is extremely low. In addition, with the increase in the degree of polymerization, the efficiency in stirring the reaction mixture lowers and this is more disadvantageous for the fixation of the diamine component. The unfixed diamine component exists in the reaction mixture or in the vapor phase part inside the reaction system, or that condensed in the partial condenser is again added to the reaction mixture. After the completion of addition of the diamine component, the system is kept under the pressure at the time of the end of the diamine component addition, for at least 5 minutes, whereby the diamine component in that condition can be fixed and the molar balance of the materials fed into the reactor can be thereby well reproduced as the molar balance of the product, polyamide with good accuracy. The uppermost limit of the time for which the pressure is kept could not be indiscriminately defined, as varying depending on the condition of the fixation of the diamine component. However, it is meaningless to keep the pressure still over the necessary period of time after the fixation of the diamine component, but it may rather bring about some disadvantages of thermal history increase and producibility depression. Accordingly, in general, the pressure retention time is preferably within 3 hours.

After the pressure reduction, in general, the pressure inside the reactor is increased when the produced polyamide is taken out of the reactor. In this case, preferably, an inert gas such as nitrogen is used for pressure increase. According to the present invention, few nylon salt and oligomer may adhere to the inside of the reactor after the product has been taken out of it, and therefore, the reactor may be used for the subsequent batch reaction for continuous batch production. The polyamide produced according to the present invention may be used as a starting material of solid-phase polymerization and may be further polymerized through solid-phase polymerization to give a polyamide having a higher molecular weight. While in melt, the polyamide produced according to the present invention may be fed into a continuous polymerization machine and may be further polymerized therein to give a polyamide having a higher molecular weight.

Not detracting from the object of the present invention, the polyamide produced according to the present invention may be blended with any other resin such as nylon 6, nylon 66, nylon 6,66, polyester, olefin or the like; and additives may be added thereto. The additives include inorganic fillers such as glass fibers, carbon fibers; tabular inorganic fillers such as glass flakes, talc, kaolin, mica, montmorillonite, organized clay; impact resistance modifiers such as various elastomers; crystal nucleating agents; lubricants such as fatty acid amide compounds, fatty acid metal salt compounds; antioxidants such as copper compounds, organic or inorganic halogen compounds, hindered phenol compounds, hindered amine compounds, hydrazine compounds, sulfur compounds, phosphorus compounds; additive agents such as thermal stabilizers; coloration inhibitors, UV absorber such as benzotriazole compounds, release agents, plasticizers, colorants, flame retardants; additive agents such as cobalt metal-containing compounds as oxygen-trapping compounds, alkali compounds for antigellation for polyamide resins, etc.

The polyamide production process of the present invention brings about the following advantages:

(a) The polyamide is produced through direct polycondensation of a diamine component and a dicarboxylic acid component not requiring a solvent, especially water, and therefore the polyamide yield per the unit volume increases and the reaction time can be shortened.
(b) Nylon salt and oligomer adhesion to the reaction system can be prevented and diamine component evaporation can be reduced, and therefore a high-level molar balance control is possible, or that is, the degree of polymerization is extremely easy to control and a homogeneous and good polyamide can be obtained.
(c) Clogging of the partial condenser and the polymer deposition inside the reactor can be prevented, and therefore continuous batch production is possible.
(d) Any high-level pressure-resistant polymerization apparatus, complicated partial condenser planning and installation of any superfluous heating means are unnecessary, and the production apparatus can be constructed inexpensively.

The polyamide resin obtained according to the production process of the present invention has excellent properties, and is favorably used in broad fields of shaped articles, films, sheets, fibers, etc.

The present invention is described concretely with reference to the following Examples and Comparative Examples. However, the present invention should not be restricted at all by these Examples and Comparative Examples. The assay methods employed herein are described below.

(1) Terminal Amino Group Concentration:
From 0.3 to 0.5 g of a polyamide resin is accurately weighed, and dissolved in 30 cc of a solution of phenol/ethanol (= 4/1 by volume) with stirring at 20 to 30°C. After completely dissolved, the solution was subjected to neutralization titration with an aqueous N/100 hydrochloric acid solution with stirring, and the terminal amino group concentration of the polyamide resin is thereby determined.

(2) Terminal Carboxyl Group Concentration:

From 0.3 to 0.5 g of a polyamide resin is accurately weighed, and dissolved in 30 cc of benzyl alcohol under a nitrogen stream with stirring at 160 to 180°C. After completely dissolved, this is cooled to 80°C or lower under a nitrogen stream, then 10 cc of methanol was added thereto with stirring, and the solution was subjected to neutralization titration with an aqueous N/100 sodium hydroxide solution with stirring, and the terminal carboxyl group concentration of the polyamide resin is thereby determined.

(3) Number-Average Molecular Weight:

From the titration data of the terminal amino group and the terminal carboxyl group, the number-average molecular weight of the polyamide resin is derived according to the following formula:

$$\text{Number-Average Molecular Weight} = 2/([NH_2] + [COOH])$$

(where $[NH_2]$ means the terminal amino group concentration ($\mu$eq/g), $[COOH]$ means the terminal carboxyl group concentration ($\mu$eq/g)).

<Example 1>

15.000 kg of accurately weighed adipic acid (purity: 99.85 wt.%) was fed into a jacketed reactor, 50-liter stainless reactor equipped with a partial condenser, a total condenser, a stirrer, a nitrogen gas inlet and a diamine-dropping port, with a temperature-controlled oil running through the jacket, and this was fully replaced with nitrogen. A heat medium at 300°C was made to run through the jacket to start heating the system, and with stirring, adipic acid was dissolved to be a uniform flow state. During this, nitrogen introduction into the reactor was started, and the pressure inside the reactor was increased up to 0.3 MPaG. This was heated up to 190°C, and with stirring the molten adipic acid, 13.909 kg of a mixed xylylenediamine (purity: 99.95 wt.%) containing 70 mol% of metaxylylenediamine and 30 mol% of paraxylylenediamine was dropwise added thereto, taking 2 hours. During this, the system was continuously heated in such a controlled manner that the liquid temperature at the end of the addition of the mixed xylylenediamine could reach 265°C, the pressure in the reactor was controlled to be 0.3 MPaG, the vapor temperature on the outlet port side of the partial condenser was controlled to be from 144 to 147°C, and the evaporating vapor was condensed through the condenser and discharged out of the reaction system. After the completion of addition of the mixed xylylenediamine, the system was heated at a heating speed of 0.2°C/min with successively stirring, and the pressure in the reactor was kept at 0.3 MPaG for 15 minutes. Further, the pressure was reduced to 80 kPaA at a speed of 0.6 MPa/hr, and the system was kept at 80 kPaA for 10 minutes. Next, the heating was stopped, the system was pressurized with nitrogen, and the product was taken out as strands through the nozzle at the lower part of the reactor, cooled with water, and cut into pellets of the product, amorphous polyamide. 10 batches in total for the reaction were continued, and the terminal group concentration of the obtained polyamide was quantitatively determined. As a result, the molar balance of the polyamide (diamine/dicarboxylic acid) was from 0.994 to 0.995 and the number-average molecular weight thereof was from 15,500 to 16,000, and both were stable. After the continuous 10-batch reaction, the reactor and the partial condenser were checked for the inside condition, and no solid remained at all. The overall process time from the start of the addition of the mixed xylylenediamine to the start of the polymer emission was 2 hours and 52 minutes.

<Example 2>

15.000 kg of accurately weighed adipic acid (purity: 99.85 wt.%) was fed into the same jacketed reactor, 50-liter stainless reactor as in Example 1, and fully replaced with nitrogen. A heat medium at 300°C was made to run through the jacket to start heating the system, and with stirring, adipic acid was dissolved to be a uniform flow state. During this, nitrogen introduction into the reactor was started, and the pressure inside the reactor was increased up to 0.1 MPaG. This was heated up to 190°C, and with stirring the molten adipic acid, 13.909 kg of a mixed xylylenediamine (purity: 99.95 wt.%) containing 70 mol% of metaxylylenediamine and 30 mol% of paraxylylenediamine was dropwise added thereto, taking 2 hours. During this, the system was continuously heated in such a controlled manner that the inner temperature at the end of the addition of the mixed xylylenediamine could reach 265°C, the pressure in the reactor was controlled to be 0.1 MPaG, the vapor temperature on the outlet port side of the partial condenser was controlled to be from 122 to 126°C, and the evaporating vapor was condensed through the condenser and discharged out of the reaction system. After the completion of addition of the mixed xylylenediamine, the system was heated at a heating speed of 0.2°C/min with successively stirring, and the pressure in the reactor was kept at 0.1 MPaG for 5 minutes. Further, the pressure was reduced to 80 kPaA at a speed of 0.6 MPa/hr, and the system was kept at 80 kPaA for 5 minutes. Next, the heating was stopped, the system was pressurized with nitrogen, and the product was taken out as strands through the nozzle at the lower part of the reactor, cooled with water, and cut into pellets of the product, amorphous polyamide. 10 batches in total for the reaction were continued, and the terminal group concentration of the obtained polyamide was quantitatively determined. As a result, the molar balance of the polyamide was from 0.994 to 0.995 and the number-average molecular weight thereof was from 15,500 to 16,000, and both were stable. After the continuous 10-batch reaction, the reactor and the partial condenser were checked for the inside condition, and no solid remained at all. The overall process time from the start of the addition of the mixed xylylenediamine to the start of the polymer emission was 2 hours and 52 minutes.

<Example 3>

15.000 kg of accurately weighed adipic acid (purity: 99.85 wt.%) was fed into the same jacketed reactor, 50-liter stainless reactor as in Example 1, and fully replaced with nitrogen. A heat medium at 300°C was made to run through the jacket to start heating the system, and with stirring, adipic acid was dissolved to be a uniform flow state. During this, nitrogen introduction into the reactor was started, and the pressure inside the reactor was increased up to 0.4 MPaG. This was heated up to 190°C, and with stirring the molten adipic acid, 13.909 kg of a mixed xylylenediamine (purity: 99.95 wt.%) containing 70 mol% of metaxylylenediamine and 30 mol% of paraxylylenediamine was dropwise added thereto, taking 2 hours. During this, the system was continuously heated in such a controlled manner that the inner temperature at the end of the addition of the mixed xylylenediamine could reach 265°C, the pressure in the reactor was controlled to be 0.4 MPaG, the vapor temperature on the outlet port side of the partial condenser was controlled to be from 151 to 155°C, and the evaporating vapor was condensed through the condenser and discharged out of the reaction system. After the completion of addition of the mixed xylylenediamine, the system was heated at a heating speed of 0.2°C/min with successively stirring, and the pressure in the reactor was kept at 0.4 MPaG for 15 minutes. Further, the pressure was reduced to 80 kPaA at a speed of 0.6 MPa/hr, and the system was kept at 80 kPaA for 12 minutes. Next, the heating was stopped, the system was pressurized with nitrogen, and the product was taken out as strands through the nozzle at the lower part of the reactor, cooled with water, and cut into pellets of the product, amorphous polyamide. 10 batches in total for the reaction were continued, and the terminal group concentration of the obtained polyamide was quantitatively determined. As a result, the molar balance of the polyamide was from 0.994 to 0.995 and the number-average molecular weight thereof was from 15,600 to 16,200, and both were stable. After the continuous 10-batch reaction, the reactor and the partial condenser were checked for the inside condition, and no solid remained at all. The overall process time from the start of the addition of the mixed xylylenediamine to the start of the polymer emission was 3 hours and 9 minutes.

<Example 4>

The same process as in Example 1 was repeated up to the addition of the diamine component. After the completion of addition of the mixed xylylenediamine, the system was heated at a heating speed of 0.2°C/min with successively stirring, and the pressure in the reactor was kept at 0.3 MPaG for 15 minutes. Further, the pressure was reduced to 80 kPaA at a speed of 0.1 MPa/hr, and the system was kept at 80 kPaA for 2 minutes. Next, the heating was stopped, the system was pressurized with nitrogen, and the product was taken out as strands through the nozzle at the lower part of the reactor, cooled with water, and cut into pellets of the product, amorphous polyamide. 5 batches in total for the reaction were continued, and the terminal group concentration of the obtained polyamide was quantitatively determined. As a result, the molar balance of the polyamide was from 0.994 to 0.995 and the number-average molecular weight thereof was from 15,400 to 16,000, and both were stable. After the continuous 5-batch reaction, the reactor and the partial condenser were checked for the inside condition, and no solid remained at all. The overall process time from the start of the addition of the mixed xylylenediamine to the start of the polymer emission was 5 hours and 19 minutes.

<Example 5> (not according to the invention)

The same process as in Example 1 was repeated up to the addition of the diamine component. After the addition of the mixed xylylenediamine, the system was heated at a heating speed of 0.2°C/min with successively stirring, and the pressure in the reactor was kept at 0.3 MPaG for 15 minutes. Further, the pressure was reduced to 80 kPaA at a speed of 1.0 MPa/hr, and the system was kept at 80 kPaA for 2 minutes. Next, the heating was stopped, the system was pressurized with nitrogen, and the product was taken out as strands through the nozzle at the lower part of the reactor, cooled with water, and cut into pellets of the product, amorphous polyamide. 5 batches in total for the reaction were continued, and the terminal group concentration of the obtained polyamide was quantitatively determined. As a result, the molar balance of the polyamide was from 0.994 to 0.995 and the number-average molecular weight thereof was from 15,300 to 16,100, and both were stable. After the continuous 5-batch reaction, the reactor and the partial condenser were checked for the inside condition, and no solid remained at all. The overall process time from the start of the addition of the mixed xylylenediamine to the start of the polymer emission was 2 hours and 46 minutes.

<Example 6>

15.000 kg of accurately weighed adipic acid (purity: 99.85 wt.%) was fed into the same jacketed reactor, 50-liter stainless reactor as in Example 1, and fully replaced with nitrogen. A heat medium at 320°C was made to run through the jacket to start heating the system, and with stirring, adipic acid was dissolved to be a uniform flow state. During this, nitrogen introduction into the reactor was started, and the pressure inside the reactor was increased up to 0.4 MPaG. This was heated up to 190°C, and with stirring the molten adipic acid, 13.909 kg of a mixed xylylenediamine (purity: 99.95 wt.%) containing 50 mol% of metaxylylenediamine and 50 mol% of paraxylylenediamine was dropwise added thereto, taking 2 hours and 30 minutes. During this, the system was continuously heated in such a controlled manner that the inner temperature at the end of the addition of the mixed xylylenediamine could reach 285°C, the pressure in the reactor was controlled to be 0.4 MPaG, the vapor temperature on the outlet port side of the partial condenser was controlled to be from 151 to 155°C, and the evaporating vapor was condensed through the condenser and discharged out of the reaction system. After the completion of addition of the mixed xylylenediamine, the system was heated at a heating speed of 0.2°C/min with successively stirring, and the pressure in the reactor was kept at 0.4 MPaG for 5 minutes. Further, the pressure was reduced to 80 kPaA at a speed of 0.6 MPa/hr, and the system was kept at 80 kPaA for 12 minutes. Next, the heating was stopped, the system was pressurized with nitrogen, and the product was taken out as strands through the nozzle at the lower part of the reactor, cooled with water, and cut into pellets of the product, amorphous polyamide. 10 batches in total for the reaction were continued, and the terminal group concentration of the obtained polyamide was quantitatively determined. As a result, the molar balance of the polyamide was from 0.993 to 0.995 and the number-average molecular weight thereof was from 15,200 to 16,000, and both were stable. After the continuous 10-batch reaction, the reactor and the partial condenser were checked for the inside condition, and no solid remained at all. The overall process time from the start of the addition of the mixed xylylenediamine to the start of the polymer emission was 3 hours and 39 minutes.

<Example 7>

15.000 kg of accurately weighed adipic acid (purity: 99.85 wt.%) was fed into the same jacketed reactor, 50-liter stainless reactor as in Example 1, and fully replaced with nitrogen. A heat medium at 300°C was made to run through the jacket to start heating the system, and with stirring, adipic acid was dissolved to be a uniform flow state. During this, nitrogen introduction into the reactor was started, and the pressure inside the reactor was increased up to 0.3 MPaG. This was heated up to 190°C, and with stirring the molten adipic acid, 13.909 kg of a mixed xylylenediamine (purity: 99.95 wt.%) containing 70 mol% of metaxylylenediamine and 30 mol% of paraxylylenediamine was dropwise added thereto, taking 30 minutes. During this, the system was continuously heated in such a controlled manner that the inner temperature at the end of the addition of the mixed xylylenediamine could reach 265°C, the pressure in the reactor was controlled to be 0.3 MPaG, the vapor temperature on the outlet port side of the partial condenser was controlled to be from 144 to 146°C, and the evaporating vapor was condensed through the condenser and discharged out of the reaction system. After the completion of addition of the mixed xylylenediamine, the system was heated at a heating speed of 0.2°C/min with successively stirring, and the pressure in the reactor was kept at 0.3 MPaG for 5 minutes. Further, the pressure was reduced to 80 kPaA at a speed of 0.6 MPa/hr, and the system was kept at 80 kPaA for 15 minutes. Next, the heating was stopped, the system was pressurized with nitrogen, and the product was taken out as strands through the nozzle at the lower part of the reactor, cooled with water, and cut into pellets of the product, amorphous poly amide. 10 batches in total for the reaction were continued, and the terminal group concentration of the obtained polyamide was quantitatively determined. As a result, the molar balance of the polyamide (diamine/dicarboxylic acid) was from 0.993 to 0.994 and the number-average molecular weight thereof was from 15,200 to 15,800, and both were stable. After the continuous 10-batch reaction, the reactor and the partial condenser were checked for the inside condition, and no solid remained at all. The overall process time from the start of the addition of the mixed xylylenediamine to the start of the polymer emission was 1 hour and 32 minutes.

<Example 8>

15.000 kg of accurately weighed adipic acid (purity: 99.85 wt.%) was fed into the same jacketed reactor, 50-liter stainless reactor as in Example 1, and fully replaced with nitrogen. A heat medium at 300°C was made to run through the jacket to start heating the system, and with stirring, adipic acid was dissolved to be a uniform flow state. During this, nitrogen introduction into the reactor was started, and the pressure inside the reactor was increased up to 0.3 MPaG. This was heated up to 190°C, and with stirring the molten adipic acid, 13.909 kg of a mixed xylylenediamine (purity: 99.95 wt.%) containing 70 mol% of metaxylylenediamine and 30 mol% of paraxylylenediamine was dropwise added thereto, taking 4 hours. During this, the system was continuously heated in such a controlled manner that the inner temperature at the end of the addition of the mixed xylylenediamine could reach 265°C, the pressure in the reactor was controlled to be 0.3 MPaG, and the vapor temperature on the outlet port side of the partial condenser was controlled at 150°C, and the evaporating vapor was condensed through the condenser and discharged out of the reaction system. After the completion of addition of the mixed xylylenediamine, the system was heated at a heating speed of 0.2°C/min with successively stirring, and the pressure in the reactor was kept at 0.3 MPaG for 5 minutes. Further, the pressure was reduced to 80 kPaA at a speed of 0.6 MPa/hr, and the system was kept at 80 kPaA for 3 minutes. Next, the heating was stopped, the system was pressurized with nitrogen, and the product was taken out as strands through the nozzle at the lower part of the reactor, cooled with water, and cut into pellets of the product, amorphous polyamide. 10 batches in total for the reaction were continued, and the terminal group concentration of the obtained polyamide was quantitatively determined. As a result, the molar balance of the polyamide (diamine/dicarboxylic acid) was from 0.994 to 0.995 and the number-average molecular weight thereof was from 15,500 to 16,000, and both were stable. After the continuous 10-batch reaction, the reactor and the partial condenser were checked for the inside condition, and no solid remained at all. The overall process time from the start of the addition of the mixed xylylenediamine to the start of the polymer emission was 4 hours and 40 minutes.

<Comparative Example 1>

15.000 kg of accurately weighed adipic acid (purity: 99.85 wt.%) was fed into the same jacketed reactor, 50-liter stainless reactor as in Example 1, and fully replaced with nitrogen. A heat medium at 300°C was made to run through the jacket to start heating the system, and with stirring, adipic acid was dissolved to be a uniform flow state. This was heated up to 190°C, and with stirring the molten adipic acid, 13.909 kg of a mixed xylylenediamine (purity: 99.95 wt.%) containing 70 mol% of metaxylylenediamine and 30 mol% of paraxylylenediamine was dropwise added thereto under normal pressure, taking 2 hours. During this, the system was continuously heated in such a controlled manner that the inner temperature at the end of the addition of the mixed xylylenediamine could reach 265°C, the vapor temperature on the outlet port side of the partial condenser was controlled to be from 100 to 104°C, and the evaporating vapor was condensed through the condenser and discharged out of the reaction system. After the completion of addition of the mixed xylylenediamine, the system was heated at a heating speed of 0.2°C/min with successively stirring. In 30 minutes after the addition, the pressure in the reactor was reduced at a speed of 0.6 MPa/hr, and after it reached 80 kPaA, the stirring was continued with keeping the pressure as such. In 30 minutes after the start of reducing the pressure, the heating was stopped, the system was pressurized with nitrogen, and the product was taken out as strands through the nozzle at the lower part of the reactor, cooled with water, and cut into pellets of the product, amorphous polyamide. The terminal group concentration of the obtained copolyamide was quantitatively determined. As a result, the molar balance of the polyamide was from 0.988 and the number-average molecular weight thereof was from 14,000. The reactor and the partial condenser were checked for the inside condition. Much nylon salt and oligomer adhered to the vapor-phase part of the reactor, and a part of the inside of the partial condenser was clogged with a white solid. 3 batches for the reaction were continued, and the reactor and the partial condenser were checked for the inside condition. The amount of the adhering substance in the vapor-phase part of the reactor increased, and the inside of the partial condenser was almost completely clogged with a white solid.

<Comparative Example 2>

The same process as in Example 1 was repeated up to the addition of the diamine component. After the completion of addition, the pressure in the reactor was kept at 0.3 MPaG for 15 minutes. Further, the pressure was reduced to 80 kPaA at a speed of 2.0 MPa/hr, and the system was kept at 80 kPaA for 20 minutes. Next, the heating was stopped, the system was pressurized with nitrogen, and the product was taken out as strands through the nozzle at the lower part of the reactor, cooled with water, and cut into pellets of the product, amorphous polyamide. The reactor and the partial condenser were checked for the inside condition, and a white solid adhered to the plate and the shaft of the stirring blade and to the side wall of the reactor. 5 batches for the reaction were continued, and the reactor and the partial condenser were checked for the inside condition. The solid adhering to the plate and the shaft of the stirring blade and to the side wall of the reactor enlarged and was yellowish.

**Claims**

1.  A process for producing a polyamide through direct polycondensation of a diamine component, which contains at least 70 mol% of a xylylenediamine, comprising the two components of metaxylylenediamine and paraxylylenediamine and containing 20 to 65 mol% of paraxylylenediamine, and a dicarboxylic acid component, substantially in the absence of a solvent and using a batch reactor equipped with a partial condenser; the process comprising the following steps:

(1) a step of feeding the dicarboxylic acid component into the reactor, and then pressurizing the reactor to increase the inner pressure to a predetermined pressure of at least 0.1 MPaG,
(2) a step of continuously or intermittently adding the diamine component to the dicarboxylic acid component while the pressure inside the reactor is kept at the predetermined pressure and while the reaction system is kept in a uniform flow state,
(3) after the addition of the diamine component, a step of lowering the pressure inside the reactor to atmospheric pressure or less at a pressure-lowering speed of from 0.1 to 0.6 MPa/hr,

whereby the expression "substantially in the absence of a solvent" is meant to indicate that no solvent exists in the reaction system, or a small amount of the solvent is present to a degree not having any influence on the effect of the present invention.

2. The process for producing a polyamide as claimed in claim 1, wherein the temperature on the vapor outlet port side of the partial condenser in the step (2) and the step (3) is controlled to be 155°C or less.

3. The process for producing a polyamide as claimed in claim 1 or 2, wherein the pressure inside the reactor in the step (2) is controlled to fall within a range of from 0.1 to 0.4 MPaG.

4. The process for producing a polyamide as claimed in any of claims 1 to 3, wherein the pressure inside the reactor is increased up to a pressure of at least 0.1 MPaG in the step (1), and thereafter the pressure is kept substantially constant until the start of the pressure reduction in the step (3),
whereby the expression "substantially constant" is meant to include the technical concept that the pressure may not be completely constant but may fluctuate in sole degree so far as the process under the pressure can exhibit the effect of the invention.

5. The process for producing a polyamide as claimed in any of claims 1 to 4, wherein the dicarboxylic acid component contains at least 70 mol% of adipic acid.

6. The process for producing a polyamide as claimed in any of claims 1 to 5, wherein the overall amount of the diamine component is added in the step (2), taking at least 30 minutes.

**Patentansprüche**

1. Verfahren zur Herstellung eines Polyamids durch direkte Polykondensation einer Diaminkomponente, die mindestens 70 Mol-% eines Xylylendiamins, umfassend die beiden Komponenten Metaxylylendiamin und Paraxylylendiamin und enthaltend 20 bis 65 Mol-% Paraxylylendiamin, enthält und einer Dicarbonsäurekomponente, im Wesentlichen in Abwesenheit eines Lösungsmittels und unter Verwendung eines Batch-Reaktors ausgestattet mit einem Teilkondensator; wobei das Verfahren die folgenden Schritte umfasst:

(1) einen Schritt des Einspeisens der Dicarbonsäurekomponente in den Reaktor und dann Druckbeaufschlagen des Reaktors, um den Innendruck auf einen vorbestimmten Druck von mindestens 0,1 MPaG zu erhöhen,
(2) einen Schritt der kontinuierlichen oder intermittierenden Zugabe der Diaminkomponente zu der Dicarbonsäurekomponente, während der Druck im Inneren des Reaktors auf dem vorbestimmten Druck gehalten wird, und während das Reaktionssystem in einem gleichmäßigen Fließzustand gehalten wird,
(3) nach der Zugabe der Diaminkomponente, einen Schritt des Absenkens des Drucks im Inneren des Reaktors auf Atmosphärendruck oder weniger bei einer Druckverminderungsgeschwindigkeit von 0,1 bis 0,6 MPa / h,

wobei der Ausdruck "im Wesentlichen in Abwesenheit eines Lösungsmittels" bezeichnet, dass kein Lösungsmittel im Reaktionssystem existiert, oder dass eine geringe Menge des Lösungsmittels in einem Grad anwesend ist, der keinen Einfluss auf den Effekt der vorliegenden Erfindung hat.

2. Verfahren zur Herstellung eines Polyamids gemäß Anspruch 1, worin die Temperatur auf der Seite der Dampfauslassöffnung des Teilkondensators in Schritt (2) und Schritt (3) auf 155 °C oder weniger eingestellt wird.

**3.** Verfahren zur Herstellung eines Polyamids gemäß Anspruch 1 oder 2, worin der Druck im Inneren des Reaktors in Schritt (2) so gesteuert wird, dass er in einen Bereich von 0,1 bis 0,4 MPaG fällt.

**4.** Verfahren zur Herstellung eines Polyamids gemäß einem der Ansprüche 1 bis 3, worin der Druck im Inneren des Reaktors in Schritt (1) auf einen Druck von mindestens 0,1 MPaG erhöht wird und danach der Druck bis zum Beginn der Druckabsenkung in Schritt (3) im Wesentlichen konstant gehalten wird,
wobei der Ausdruck "im Wesentlichen konstant" meint, dass das technische Konzept eingeschlossen ist, dass der Druck nicht vollständig konstant sondern in einem solchen Grad schwanken kann, solange das Verfahren unter dem Druck den Effekt der vorliegenden Erfindung erzielen kann.

**5.** Verfahren zur Herstellung eines Polyamids gemäß einem der Ansprüche 1 bis 4, worin die Dicarbonsäurekomponente mindestens 70 Mol-% Adipinsäure enthält.

**6.** Verfahren zur Herstellung eines Polyamids gemäß einem der Ansprüche 1 bis 5, worin die Gesamtmenge der Diaminkomponente in dem Schritt (2) zugegeben wird, was mindestens 30 Minuten dauert.

**Revendications**

**1.** Procédé de production d'un polyamide par polycondensation directe d'un composant diamine, qui contient au moins 70% en moles d'une xylylènediamine, comprenant les deux composants de métaxylylènediamine et de paraxylylènediamine et contenant de 20 à 65% en moles de paraxylylènediamine, et un composant acide dicarboxylique, substantiellement en l'absence d'un solvant et en utilisant un réacteur discontinu équipé d'un condenseur partiel ; le procédé comprenant les étapes suivantes :

(1) une étape consistant à introduire le composant acide dicarboxylique dans le réacteur, puis à mettre sous pression le réacteur pour augmenter la pression interne jusqu'à une pression prédéterminée d'au moins 0,1 MPaG,
(2) une étape consistant à ajouter de manière continue ou intermittente le composant diamine au composant acide dicarboxylique pendant que la pression à l'intérieur du réacteur est maintenue à la pression prédéterminée et pendant que le système réactionnel est maintenu dans un état d'écoulement uniforme,
(3) après l'ajout du composant diamine, une étape consistant à diminuer la pression à l'intérieur du réacteur jusqu'à une pression inférieure ou égale à la pression atmosphérique à une vitesse de diminution de pression allant de 0,1 à 0,6 MPa/h,

où l'expression "substantiellement en l'absence d'un solvant" est censée indiquer qu'il n'y a pas de solvant dans le système réactionnel ou qu'une petite quantité du solvant est présente à un degré n'ayant aucune influence sur l'effet de la présente invention.

**2.** Procédé de production d'un polyamide tel que revendiqué dans la revendication 1, dans lequel la température du côté de l'orifice de sortie de vapeur du condenseur partiel dans l'étape (2) et l'étape (3) est régulée pour être inférieure ou égale à 155°C.

**3.** Procédé de production d'un polyamide selon la revendication 1 ou 2, dans lequel la pression à l'intérieur du réacteur dans l'étape (2) est régulée pour se situer dans une plage allant de 0,1 à 0,4 MPaG.

**4.** Procédé de production d'un polyamide tel que revendiqué dans l'une des revendications 1 à 3, dans lequel la pression à l'intérieur du réacteur est augmentée jusqu'à une pression d'au moins 0,1 MPaG dans l'étape (1), puis la pression est maintenue substantiellement constante jusqu'au début de la réduction de pression dans l'étape (3), moyennant quoi l'expression "substantiellement constante" est censée inclure le concept technique selon lequel la pression peut ne pas être complètement constante mais peut fluctuer à un certain degré dans la mesure où le procédé sous la pression peut présenter l'effet de l'invention.

**5.** Procédé de production d'un polyamide tel que revendiqué dans l'une des revendications 1 à 4, dans lequel le composant acide dicarboxylique contient au moins 70% en moles d'acide adipique.

**6.** Procédé de production d'un polyamide tel que revendiqué dans l'une des revendications 1 à 5, dans lequel la quantité totale du composant diamine est ajoutée dans l'étape (2), pendant au moins 30 minutes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3315700 B
- JP 4322874 B
- JP 48012390 A
- JP 1014925 B
- JP 58111829 A
- JP 6207004 A
- JP 7324130 A